# EUROPÄISCHE PATENTSCHRIFT

(11) **EP 1 028 213 B1**
(45) Veröffentlichungstag und Bekanntmachung des Hinweises auf die Patenterteilung: **17.08.2005**
(21) Anmeldenummer: 99125584.5
(22) Anmeldetag: 21.12.1999
(51) Int. Cl.: E05D 7/12, E05D 5/02

(54) **Vorrichtung zur Befestigung eines Beschlagteils, vorzugsweise des Tragarms eines Scharniers, an einer Möbelwand o.dgl.**
Device for mounting a fitting element, preferably a support arm of a hinge, to a furniture wall
Dispositif de fixation d'une pièce de ferrure, de préference un bras portant de charnière, à une paroi de meuble

(30) Priorität: 11.02.1999 DE 29902443 U; 01.04.1999 DE 29906051 U; 04.05.1999 DE 29907930 U
(43) Veröffentlichungstag der Anmeldung: 16.08.2000
(60) Teilanmeldung: 04007219.1
(73) Patentinhaber: Arturo Salice S.p.A., I-22060 Novedrate (Como) (IT)
(72) Erfinder:
(74) Vertreter: Laufhütte, Dieter, Dr.-Ing.

(56) Entgegenhaltungen:
- EP-A- 0 453 829
- AT-B- 383 851
- DE-U- 9 409 459

## Beschreibung

Die Erfindung betrifft eine Vorrichtung zur Befestigung eines Beschlagteils nach dem Oberbegriff des Anspruchs 1.

Beispielsweise bei dem Anbringen von Möbeltüren an den Seitenwänden von Schränken ist die Montagearbeit wesentlich erleichtert, wenn die Scharnierarme der bereits an den Möbeltüren vormontierten Scharniere nicht mit den Seitenwänden oder bereits an diesen befestigten Grundplatten verschraubt werden müssen, sondern durch Schnappverbindungen einfach auf an den Seitenwänden vormontierte Grundplatten aufgerastet werden können. Derartige - Rastverbindungen- zwischen vormontierten Grundplatten und mit Rasteinrichtungen versehenen Scharnierarmen, die üblicherweise an einer den Scharnierarm tragenden Zwischenplatte angeordnet sind, sind in unterschiedlichen Ausführungsformen bekannt. Diese leicht und schnell zu montierenden Rastverbindungen bedingen jedoch üblicherweise aufwendige und daher die Scharniere bzw. deren Grund- und Zwischenplatten verteuernde Rasteinrichtungen. Eine gattungsgemäße Vorrichtung ist aus der DE 94 09 459 U bekannt.

Aufgabe der Erfindung ist es daher, eine Befestigungsvorrichtung der eingangs angegebenen Art zu schaffen, die eine einfache und schnelle Verbindung des Beschlagteils mit einer Grundplatte ermöglicht und auch einfach und schnell wieder lösbar ist.

Erfindungsgemäß wird diese Aufgabe durch die Kombination der Merkmale der Ansprüche 1 bzw. 5 gelöst.

Nach Anspruch 1 ist vorgesehen, daß die Grundplatte und das Beschlagteil bzw. das mit diesem verbundene Teil durch Parallelverschiebung in ihre einander hintergreifende gekuppelte Stellung verbringbar sind, und daß die Grundplatte an ihrem gegenüberliegenden Endbereich mit einem drehbaren, aber axial unverschieblichen, exzentrischen, scheibenförmigen Kopf versehen ist, der aus seiner die Grundplatte überdeckenden Stellung in eine diese überragende Stellung drehbar ist, in der er das Beschlagteil in einem Durchbruch durchsetzt, einen Absatz des Randes des Durchbruchs übergreift und das Beschlagteil derart verschiebt, daß die miteinander zu verhakenden Teile in ihre gekuppelte Stellung geraten.

Die erfindungsgemäße Befestigungsvorrichtung ermöglicht eine einfache und schnelle und wieder lösbare Verbindung eines Beschlagteils mit einer vormontierten Grundplatte. Das Beschlagteil oder ein mit diesem verbundenes Teil braucht nur auf die Grundplatte aufgesetzt zu werden, wobei es zur Herstellung der Verbindung anschließend nur noch notwendig ist, den exzentrischen Kopf mit einem Werkzeug, beispielsweise einem Schraubenzieher, um einen Bruchteil einer ganzen Drehung zu verdrehen, um eine feste Verbindung zu bewirken. Durch entsprechende Rückdrehung der exzentrischen Scheibe läßt sich die Verbindung wieder lösen. Die erfindungsgemäße Befestigungsvorrichtung läßt sich auch deshalb einfach montieren, weil die Grundplatte in einfacher Weise durch Schrauben oder eindrückbare Dübel in vorgebohrten Löchern eines Tragteils befestigt werden kann.

Zweckmäßigerweise ist das kuppelnde Teil des Beschlagteils eine Platte.

Die Grundplatte kann an ihrem vorderen Ende mit einer spitzwinkeligen Kante und die Platte mit einer diesen hintergreifenden komplementären Abwinkelung versehen sein, so daß die Verhakung beider Teile einfach zu bewirken ist.

In weiterer Ausgestaltung der Erfindung ist vorgesehen, daß der von dem Kopf übergriffene Absatz des Randes des Durchbruchs der Platte mit einer keilförmigen Abschrägung versehen ist, so daß beim Drehen des exzentrischen Kopfes das Beschlagteil gegen die Grundplatte gespannt wird.

Nach der anderen Ausführungsform gemäß Anspruch 5 wird die Aufgabe dadurch gelöst, daß die Grundplatte und das Beschlagteil an einander gegenüberliegenden Enden mit durch Parallelverschiebung und Hintergreifen miteinander verhakbaren Teilen versehen sind und daß die Grundplatte drehbar aber axial unverschieblich mit einem exzentrischen plattenförmigen Kopf versehen ist, der einen Durchbruch des Beschlagteils durchsetzt, an einer Kante des Durchbruchs angreift und dadurch die miteinander zu verhakenden Teile in ihre gekuppelte Stellung verschiebt.

Um die Montage der erfindungsgemäßen Vorrichtung zu erleichtern, was insbesondere dann zweckmäßig ist, wenn beispielsweise mehrere eine Tür tragende Scharniere an einer Möbelwand zu montieren sind, ist nach einer erfinderischen Weiterbildung vorgesehen, daß das mit der Grundplatte verhakte Beschlagteil oder die mit diesem verbundene und mit der Grundplatte verhakte Zwischenplatte an ihren der Verhakung gegenüberliegenden Endbereichen durch eine federnde Schnappverbindung zum Zwecke der Vormontage lose aneinander fixierbar sind. Diese Ausgestaltung der Erfindung ermöglicht es, die Beschlagteile bzw. die Scharnierarme durch einfaches Aufhaken und Niederdrücken mit der Möbelwand o.dgl. lose zu verbinden, so daß die erforderlichen Justierungen vorgenommen werden können, bevor das Beschlagteil bzw. die Zwischenplatte mit der Grundplatte verriegelt wird.

Zweckmäßigerweise ist das Beschlagteil in seinem Endbereich mit einem federnden Element versehen, das bei dessen Niederdrücken in die Ebene der Grundplatte hinter eine hintere abgeschrägte Rastkante der Grundplatte schnappt.

Zweckmäßigerweise besteht das federnde Element aus einem an den seitlichen Rändern der Zwischenplatte gehalterten Federdraht.

Nach einer anderen Ausführungsform ist vorgesehen, daß das federnde Element aus einer auf dem Schaft des Exzenters zwischen dem exzentrischen Kopf und der Grundplatte gehalterten Federscheibe besteht.

Ein Ausführungsbeispiel der Erfindung wird nachstehend anhand der Zeichnung näher erläutert. In dieser zeigt
- Fig. 1: einen Schnitt durch einen dreidimensional verstellbaren Scharnierarm, dessen untere Zwischenplatte mit einer an einer Tragwand vormontierten Grundplatte verbindbar ist, in von dieser abgehobenen Zustand,
- Fig. 2: eine der Fig. 1 entsprechende Darstellung, in der die den Scharnierarm tragende Zwischenplatte mit der vormontierten Grundplatte verbunden ist,
- Fig. 3: eine Draufsicht auf die Anordnung nach Fig. 2,
- Fig. 4: eine Draufsicht auf die auf der kuppelnden Platte des Scharnierarms querverschieblich geführte Zwischenplatte,
- Fig. 5: eine Draufsicht auf die untere mit der vormontierten Grundplatte kuppelnde Platte,
- Fig. 6: eine Draufsicht auf die an einem Tragteil vorzumontierende Grundplatte,
- Fig. 7: einen Schnitt längs der Linie VII - VII durch die kuppelnde Platte nach Fig. 5,
- Fig. 8 bis 10: eine den Fig. 1 bis 3 entsprechende andere Ausführungsform einer Verbindung zwischen einer kuppelnden Zwischenplatte und einer vormontierten Grundplatte,
- Fig. 11: eine Seitenansicht der unteren Zwischenplatte des zu montierenden Scharnierarms,
- Fig. 12: eine Draufsicht auf die Platte nach Fig. 11,
- Fig. 13: eine Draufsicht auf die vorzumontierende Grundplatte,
- Fig. 14: eine Vorderansicht der Platte nach Fig. 13,
- Fig. 15: einen Schnitt längs der Linie XV - XV durch die Grundplatte nach Fig. 13,
- Fig. 16: eine der Fig. 1 entsprechende Darstellung der Vorrichtung, bei der die Grundplatte und die Zwischenplatte zum Zwecke der Vormontage mit einer aus einem Federdraht bestehenden Rastvorrichtung versehen sind,
- Fig. 17: die Vorrichtung nach Fig. 16, in der die Grundplatte und die Zwischenplatte zum Zwecke der Vormontage miteinander verrastet sind,
- Fig. 18: eine der Fig. 2 entsprechende Darstellung der Vorrichtung, bei der die Grundplatte und die Zwischenplatte nach ihrer verrasteten Vormontage durch Schließen des Exzenters miteinander verriegelt sind,
- Fig. 19: eine Unteransicht der Zwischenplatte nach Fig. 16,
- Fig. 20: einen Längsschnitt durch die Grundplatte nach Fig. 16 bis 18,
- Fig. 21: eine Draufsicht auf die Grundplatte nach Fig. 20,
- Fig. 22: eine der Fig. 2 entsprechende Darstellung, in der die Zwischenplatte und die Grundplatte vor Schließen der Verriegelung durch eine federnde Scheibe in ihrer vormontierten Stellung miteinander verrastet sind und
- Fig. 23: eine Draufsicht auf die Grundplatte nach Fig. 22.

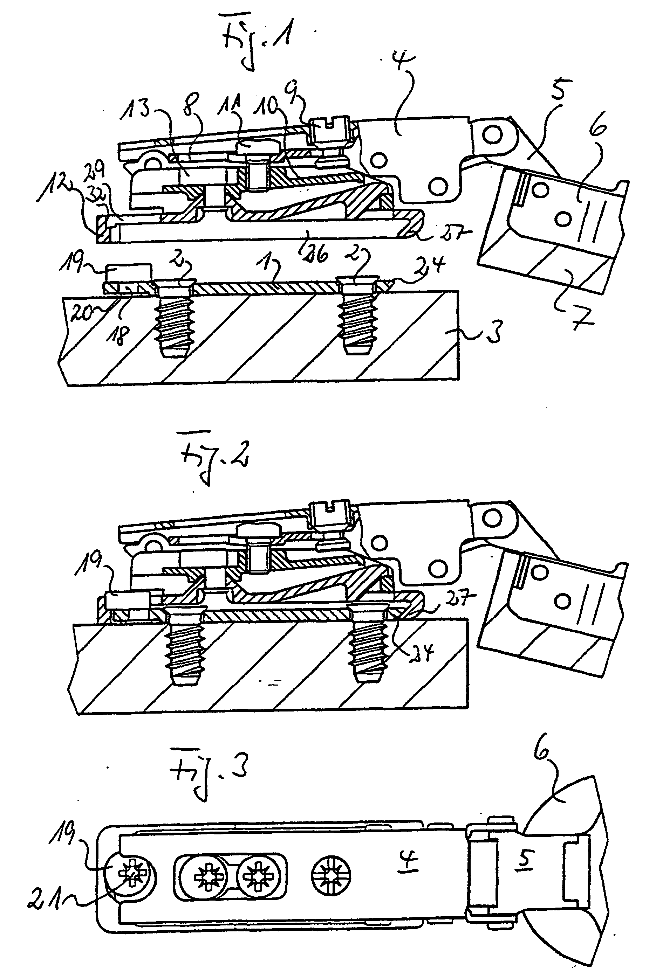

Aus den Fig. 1 bis 3 ist ein aus einem Scharnierarm mit diesen tragenden Zwischenplatten bestehendes Beschlagteil ersichtlich, das mit einer Grundplatte 1 verbindbar ist, die durch Schrauben 2 an einer Möbelseitenwand 3 vormontiert ist.

Der im Querschnitt U-förmige Scharnierarm 4 ist in üblicher Weise durch zwei Lenker 5 mit einem verschwenkbaren Scharniertopf 6 verbunden, der in üblicher Weise in einer flachen Sacklochbohrung einer Tür oder Klappe 7 befestigt ist.

Der Scharnierarm 4 ist schwenkbar auf einer ersten Zwischenplatte 8 gelagert und relativ zu dieser durch Betätigung der Stellschraube 9 zur Seiteneinstellung verschwenkbar.

Die erste ebenfalls im Querschnitt U-förmige Zwischenplatte 8 ist auf der zweiten Zwischenplatte 10 längsverschieblich zur Tiefeneinstellung geführt und relativ zu dieser durch die ein Langloch durchsetzende Befestigungsschraube 11 fixierbar. Die zweite Zwischenplatte 10 ist auf der unteren der Kupplung dienenden Zwischenplatte 12 zur Höheneinstellung quer verschieblich geführt, wobei die Höhenverstellung durch Betätigung einer exzentrischen Scheibe 13 erfolgt. Die Art dieser Höhenverstellung durch einen Exzenter ist aus dem DE-GM 94 09 459.5 bekannt, auf die zur näheren Beschreibung Bezug genommen wird. Bei dieser bekannten Befestigungsvorrichtung ist die der unteren kuppelnden Zwischenplatte 12 entsprechende Grundplatte unmittelbar mit einer Tragwand verschraubt, während die der quer verschieblichen zweiten Zwischenplatte 10 entsprechende Zwischenplatte als quer verschiebliche Deckplatte ausgebildet ist.

Die dreidimensionale Verstellbarkeit eines Scharnierarms durch Zwischenplatten ist an sich bekannt und wird daher hier näher nicht beschrieben.

Die vorliegende Erfindung betrifft die besondere Art der Befestigung der unteren kuppelnden Zwischenplatte 12 mit der vormontierten Grundplatte 1, die nachfolgend näher beschrieben wird.

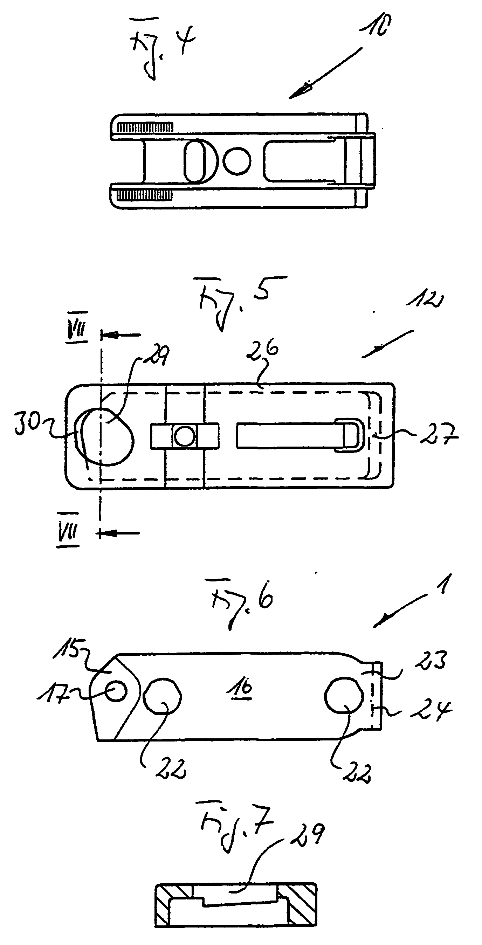

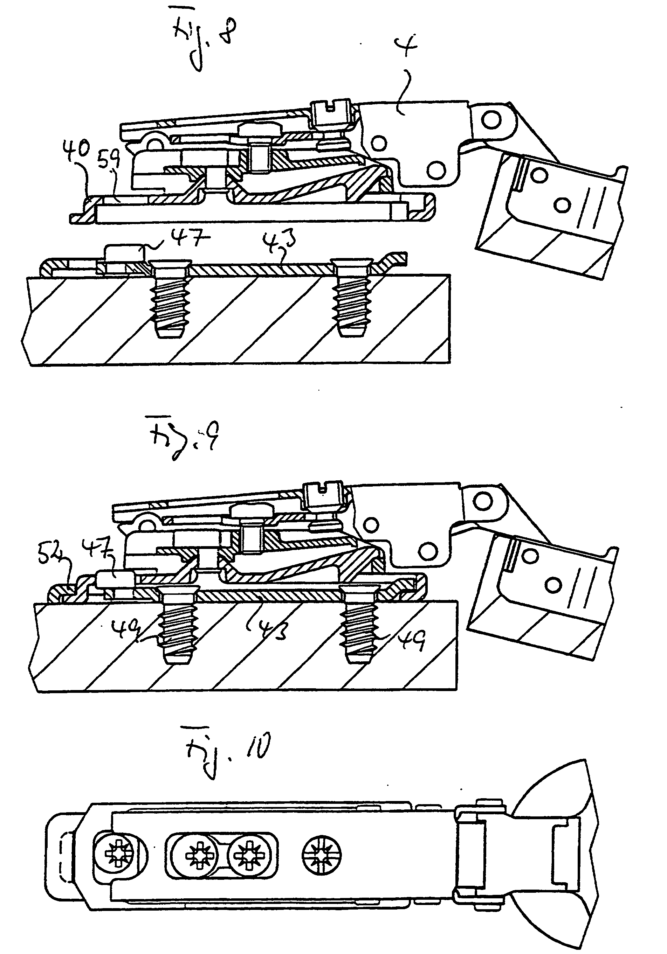

Die Grundplatte 1 besteht aus einem im wesentlichen rechteckigen Zuschnitt aus Stahlblech. Der linke Endabschnitt 15 ist durch eine Abkröpfung gegenüber dem Mittelteil 16 angehoben, so daß zwischen der Ebene der Unterseite des Mittelteils 16 und der Unterseite des Endabschnitts 15 ein Spalt gebildet ist. Der Endabschnitt 15 ist mit einer Bohrung 17 versehen, die ein Schaft 18 durchsetzt, der auf seiner Oberseite einen scheibenförmigen exzentrischen Kopf 19 trägt und auf seiner Unterseite einen Nietkopf 20, durch den der Schaft 18 in der Bohrung 17 drehbar, aber in axialer Richtung unverschieblich gehalten ist. Der exzentrische scheibenförmige Kopf 19 ist in der aus Fig. 3 ersichtlichen Weise mit einem Kreuzschlitz 21 versehen, so daß er mit einem Kreuzschlitzschraubenzieher gedreht werden kann.

Die Grundplatte 1 ist weiterhin mit zwei Befestigungsbohrungen 22 versehen, durch die zur Vormontage an einem Tragteil 3 Befestigungsschrauben 2 greifen. An seinem rechten in der Breite verringerten Ende 23 ist die Grundplatte 1 mit einer Abschrägung versehen, so daß eine hintergreifbare hakenförmige Kante 24 gebildet ist.

Mit der Grundplatte 1 ist die untere kuppelnde Zwischenplatte 12 verbindbar, die über die erste Zwischenplatte 8 und die zweite Zwischenplatte 10 den Scharnierarm trägt. Die untere Zwischenplatte 12 ist als eine rechteckige, die Grundplatte 1 übergreifende Deckplatte ausgebildet, die auf ihrer Unterseite mit einem umlaufenden Rand 26 versehen ist. An ihrem rechten Ende ist der gerade verlaufende Randabschnitt 27 hakenförmig ausgebildet, und zwar mit einem zu dem hakenförmigen Vorsprung 24 komplementären Profil, so daß der hakenförmige Vorsprung 24 und der hakenförmige Abschnitt 27 in der aus Fig. 2 ersichtlichen Weise miteinander in verhakenden Eingriff gebracht werden können.

An seinem dem hakenförmigen Abschnitt 27 gegenüberliegenden linken Endbereich ist die Zwischenplatte 12 mit einem Durchbruch 29 versehen, der größer ist als der Durchmesser des exzentrischen Kopfes 19, so daß die Zwischenplatte 12 auf die Grundplatte 1 in der Weise aufgesetzt werden kann, daß der exzentrische Kopf 19 in dem Durchbruch 29 liegt. An ihrem linken Endbereich ist der Durchbruch 29 mit einem stufenförmigen Absatz 30 versehen.

Wird die kuppelnde Zwischenplatte 12 in der aus Fig. 1 ersichtlichen Weise von oben her auf die Grundplatte 1 aufgesetzt, liegen die mit zueinander verhakenden Teile 24, 27 voreinander und der exzentrische scheibenförmige Kopf 19, der in seiner aus Fig. 1 ersichtlichen Montageausgangslage vollständig die Grundplatte 1 überdeckt, greift in den Durchbruch 29 der Zwischenplatte 12 ein. In dieser zusammengefügten Stellung wird mit einem Kreuzschraubenzieher der exzentrische Kopf 19 aus der in Fig. 1 ersichtlichen Stellung in die aus den Fig. 2 und 3 ersichtliche Stellung gedreht, in der der Kopf 19 den stufenförmigen und keilförmig ansteigenden Absatz 30 übergreift und mit seinem Rand an die Kante 32 des stufenförmigen Absatzes anstößt, so daß die Zwischenplatte 12 relativ zu der Grundplatte 1 nach links verschoben wird und die zueinander komplementären miteinander verhakenden Teile 24, 27 in Eingriff miteinander geraten.

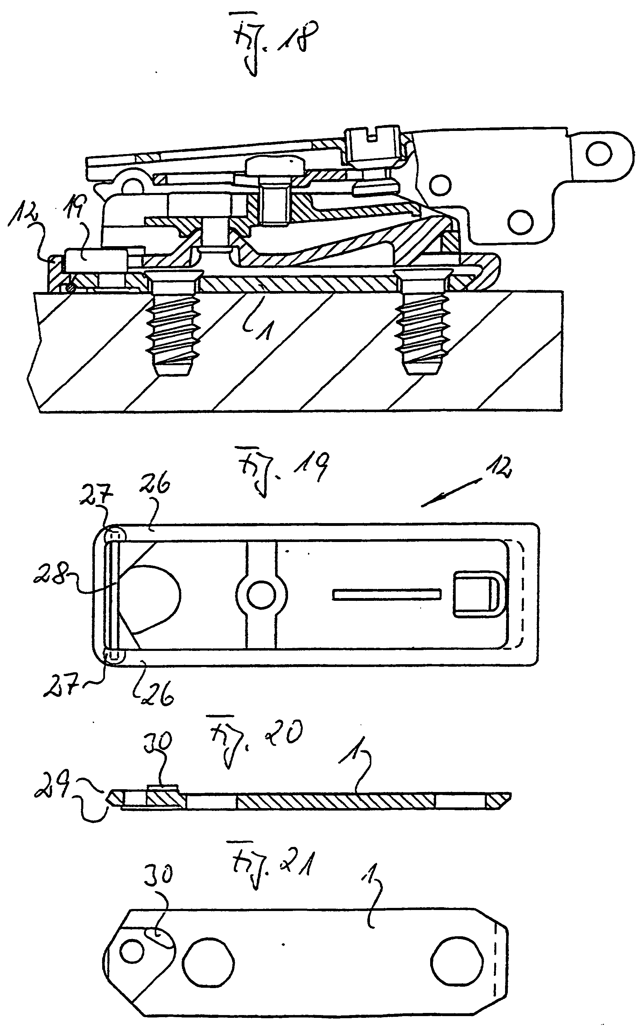

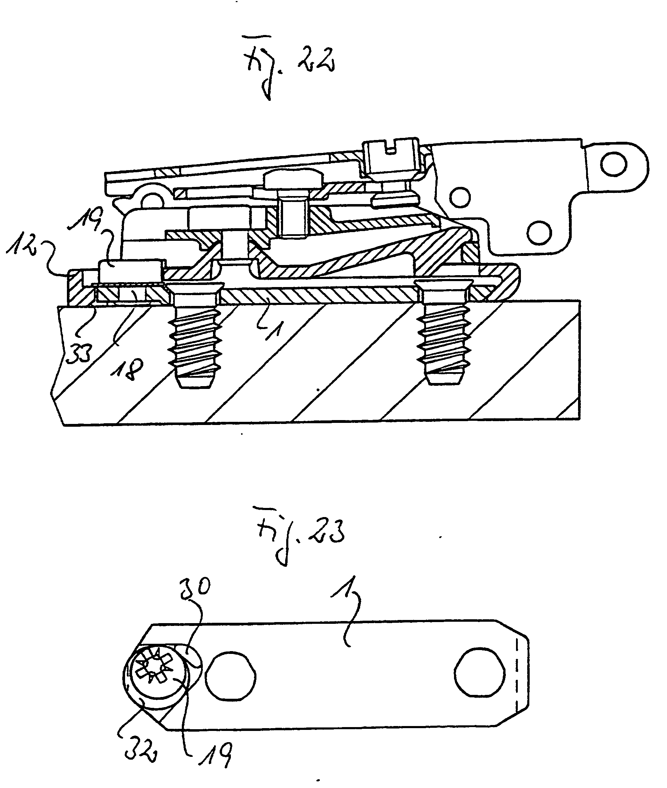

Bei dem Ausführungsbeispiel nach den Fig. 8 bis 14 ist der die dreidimensionale Verstellung ermöglichende Aufbau der den Scharnierarm 4 tragende Zwischenplatten bis auf die untere kuppelnde Zwischenplatte 40 identisch mit der Ausgestaltung nach den Fig. 1 bis 3. Die untere kuppelnde Zwischenplatte 40 ist durch einen mit dieser vernieteten Exzenter mit der zweiten Zwischenplatte 41 verbunden, wie dies in dem DE-GM 94 09 459.4 beschrieben worden ist.

Die Zwischenplatte 40 ist wiederum im wesentlichen rechteckig ausgebildet und weist auf ihrer Unterseite einen umlaufenden Rand 42 auf, mit dem sie die Grundplatte 43 teilweise übergreift. Die Grundplatte 43 weist in ihrem linken Endbereich einen gegenüber deren Hauptteil 44 erhöhten Abschnitt 45 auf, der mit einer Bohrung 46 versehen ist, in der in der anhand der Fig. 1 bis 3 beschriebenen Weise drehbar aber in axialer Richtung unverschieblich ein scheibenförmiger exzentrischer Kopf 47 drehbar gehalten ist. Die Grundplatte 43 ist wiederum mit zwei Bohrungen 48 versehen, mit der diese durch Befestigungsschrauben 49 an einer Möbelseitenwand befestigt werden kann.

Die Grundplatte 43 ist in ihrem rechten Endbereich mit einem in ihrer Breite verringerten aufragenden hakenförmigen Teil 50 versehen. In ihrem linken Endbereich ist die Grundplatte 43 mit einem Durchbruch 51 versehen, der an seiner linken Seite mit einer hintergreifbaren Kante 52 versehen ist.

Die untere kuppelnde Zwischenplatte 40 ist in ihrem rechten Endbereich mit einem Durchbruch 54 versehen, deren äußeren Kante durch einen Steg 55 gebildet ist, der in dem aus Fig. 9 ersichtlichen Zustand von dem hakenförmigen Teil 50 übergriffen wird. An ihrem linken Ende ist die Zwischenplatte 40 mit einer nach unten gerichteten hakenförmigen Abwinkelung 56 versehen, die in dem aus Fig. 9 ersichtlichen gekuppelten Zustand die hintere Kante 52 des Durchbruchs 51 der Grundplatte 43 untergreift.

Die untere Zwischenplatte 40 ist in ihrem linken Endbereich weiterhin mit einem im wesentlichen rechteckigen Durchbruch 59 versehen, der der Aufnahme des exzentrischen Kopfes 47 dient.

Zur Verbindung der kuppelnden Zwischenplatte 40 mit der Grundplatte 43 wird die Zwischenplatte 40 in der aus Fig. 8 ersichtlichen Weise auf die Grundplatte 43 in einem Zustand aufgesetzt, in der der exzentrische Kopf den erhöhten Abschnitt 40 vollständig überdeckt. Sobald die Zwischenplatte 40 auf die Grundplatte 43 aufgesetzt ist, wird durch einen Kreuzschlitzschraubenzieher der exzentrische Kopf 47 in der Weise gedreht, daß dessen Rand an der hinteren Kante 60 des Durchbruchs 59 angreift und die Zwischenplatte 40 nach links verschiebt, so daß die miteinander zu verhakenden Teile 50, 55 und 52, 56 in verhakenden Eingriff miteinander kömmen.

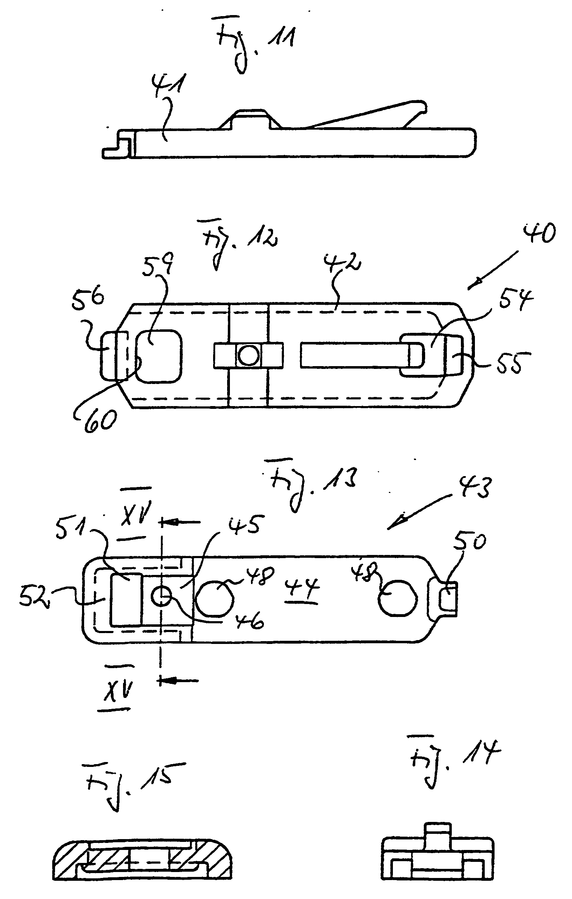

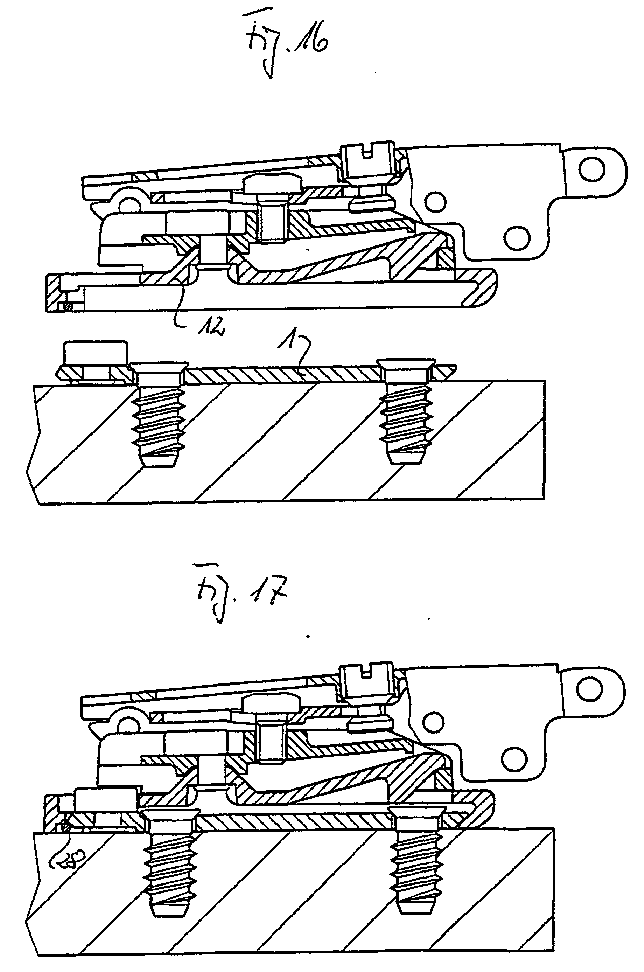

Anhand der Fig. 16 bis 21 wird eine Vorrichtung der in den Fig. 1 bis 15 beschriebenen Art näher erläutert, bei der die Grundplatte 1 und die Zwischenplatte 12 zum Zwecke der Vormontage miteinander verrastbar sind. Die Zwischenplatte 12 weist im Endbereich des auf ihrer Unterseite umlaufenden Randes 26 einander gegenüberliegende Taschen oder Ausnehmungen 27 auf, in denen die Enden eines federnden Drahtstücks 28 gehaltert sind. Die Grundplatte 1 ist an ihrem hinteren, also der Gelenkseite gegenüberliegenden Ende mit einer dachförmigen Abschrägung 29 versehen. Diese dachförmige Abschrägung 29 und die Anordnung des Federdrahts 28 sind so gewählt, daß sich die aus Fig. 17 ersichtliche Verrastung der Grundplatte 1 mit der Zwischenplatte 12 ergibt, wenn beide in Eingriff mit ihren verhakenden Teilen 24, 27 gebracht und anschließend die Zwischenplatte 12 mit ihrem rückwärtigen Ende niedergedrückt wird, so daß der Federdraht 28 über die obere Schrägfläche 29 der Grundplatte 1 gleitet und verrastend an der unteren Schrägfläche 29 angreift. Diese nur durch Verrastung bewirkte vorfixierte Stellung ist aus Fig. 17 ersichtlich. Nach einer eventuell erforderlichen Justierung kann dann die aus Fig. 18 ersichtliche endgültige Verriegelung durch die beschriebene Verdrehung der exzentrischen Scheibe bewirkt werden.

Die Grundplatte 1 ist zusätzlich auf ihrer Oberseite mit einem noppenartigen Vorsprung 30 versehen, der einen Anschlag für den exzentrischen Kopf 19 in der offenen, also nicht verriegelnden Stellung, bildet.

Bei dem Ausführungsbeispiel nach Fig. 22 und 23 ist auf dem Schaft 18 zwischen dem exzentrischen Kopf 19 und der Oberseite der Grundplatte 1 eine federnde Scheibe 32 gehaltert, die das hintere Ende der Grundplatte in der aus den Fig. 22 und 23 ersichtlichen Weise geringfügig überragt. Der Rand der Zwischenplatte 12 ist in deren hinteren Endbereich mit einer Abschrägung 33 versehen. Werden nun die Grundplatte 1 und die Zwischenplatte 12 an ihrem vorderen Endbereich in der beschriebenen Weise miteinander verhakt und wird sodann die Zwischenplatte 12 mit ihrem hinteren Endbereich niedergedrückt, überfährt der mit der Abschrägung 33 versehene hintere Rand der Zwischenplatte den überragenden Teil der federnden Platte 32 bis sich diese in der aus Fig. 22 ersichtlichen Weise auf die Stufe legt, die zwischen dem Durchbruch 29 und dem hinteren Rand der Zwischenplatte 12 gebildet ist.

## Patentansprüche

1. Vorrichtung zur Befestigung eines Beschlagteils, vorzugsweise des Tragarms (4) eines Scharniers, an einer Möbelwand (3) o.dgl., bestehend aus einer an der Wand (3), z.B. durch Dübel oder Schrauben (2), befestigbaren Grundplatte (1), mit der das Beschlagteil oder ein mit diesem verbundenes Teil (12) verbindbar ist, wobei die Grundplatte (1) und das Beschlagteil (4, 12) an einem Ende mit miteinander verhakbaren Vorsprüngen (24) und/oder Abwinkelungen (27) versehen und an ihren gegenüberliegenden Endbereichen mit einer beide verriegelnden Einrichtung versehen sind,
**dadurch gekennzeichnet,**
**dass** die Grundplatte (1) und das Beschlagteil (4) bzw. das mit diesem verbundene Teil (12) durch Parallelverschiebung in ihre einander hintergreifende gekuppelte Stellung verbringbar sind, und daß die Grundplatte (1) an ihrem gegenüberliegenden Endbereich mit einem drehbaren, aber axial unverschiebbaren, exzentrischen scheibenförmigen Kopf (19) versehen ist, der aus seiner die Grundplatte (1) überdeckenden Stellung in eine diese überragende Stellung drehbar ist, in der er das Beschlagteil (12) in einem Durchbruch (29) durchsetzt, einen Absatz (30) des Randes des Durchbruchs (29) übergreift und das Beschlagteil (4, 12) der Art verschiebt, daß die miteinander zu verhakenden Teile (24, 27) in ihre gekuppelte Stellung geraten.

2. Vorrichtung nach Anspruch 1, **dadurch gekennzeichnet, daß** das kuppelnde Teil des Beschlagteils eine Platte (12) ist.

3. Vorrichtung nach einem der Ansprüche 1 oder 2, **dadurch gekennzeichnet, daß** die Grundplatte (1) an ihrem vorderen Ende mit einer spitzwinkeligen Kante (24) und die Platte (12) mit einer diese hintergreifenden komplementären Abwinklung (27) versehen ist.

4. Vorrichtung nach einem der Ansprüche 1 bis 3, **dadurch gekennzeichnet, daß** der von dem Kopf (19) übergriffene Absatz (30) des Randes des Durchbruchs (29) der Platte (12) mit einer keilförmigen Abschrägung versehen ist.

5. Vorrichtung zur Befestigung eines Beschlagteils, vorzugsweise des Tragarms (4) eines Scharniers, an einer Möbelwand (3) o.dgl., bestehend aus einer an der Wand (3), z.B. durch Dübel oder Schrauben (2), befestigbaren Grundplatte (43) mit der das Beschlagteil oder ein mit diesem verbundenes Teil (40) verbindbar ist, wobei die Grundplatte (43) und das Beschlagteil (40) an einem Ende mit miteinander verhakbaren Vorsprüngen (50) und/oder Abwinkelungen (55) versehen und an ihren gegenüberliegenden Endbereichen mit einer beide verriegelnden Einrichtung versehen sind,
**dadurch gekennzeichnet,**
**daß** die Grundplatte (43) und das Beschlagteil (4, 40) an einander gegenüberliegenden Enden mit durch Parallelverschiebung und Hintergreifen mit einander verhakbaren Teilen (50, 55; 52, 56) versehen sind und daß die Grundplatte (43) mit einem drehbaren, aber axial unverschieblichen exzentrischen plattenförmigen Kopf (47) versehen ist, der einen Durchbruch (59) des Beschlagteils (40) durchsetzt, an einer Kante des Durchbruchs (59) angreift und **dadurch** die miteinander zu verhakenden Teile in ihre gekuppelte Stellung verschiebt.

6. Vorrichtung nach einem der Ansprüche 1 bis 5, **dadurch gekennzeichnet, daß** das mit der Grundplatte (1,43) verhakte Beschlagteil (4) oder die mit diesem verbundene und mit der Grundplatte (1,43) verhakte Zwischenplatte (12,40) an ihren der Verhakung gegenüberliegenden Endbereichen durch eine federnde Schnappverbindung zum Zwecke der Vormontage lose aneinander fixierbar sind

7. Vorrichtung nach Anspruch 6, **dadurch gekennzeichnet, daß** das Beschlagteil (4) oder die Zwischenplatte (12) in ihren Endbereichen mit einem federnden Element versehen sind, das bei deren Niederdrücken in die Ebene der Grundplatte (1) hinter eine hintere abgeschrägte Rastkante (29) der Grundplatte (1) schnappt.

8. Vorrichtung nach Anspruch 7, **dadurch gekennzeichnet, daß** das federnde Element aus einem in seitlichen Rändern (26) der Zwischenplatte (12) gehalterten Federdraht (28) besteht.

9. Vorrichtung nach Anspruch 7, **dadurch gekennzeichnet, daß** das fedemde Element aus einer auf dem Schaft (18) des exzentrischen platten förmigen Kopfes (19) zwischen dem exzentrischen Kopf und der Grundplatte (1) gehalterten Federscheibe (32) besteht.

## Claims

1. A device for mounting a fitting element, preferably the support arm (4) of a hinge, to a furniture wall (3) or the like, comprising a base plate (1), which can be attached to the wall (3) e.g. by means of dowels or screws (2) and with which the fitting element or a part (12) connected therewith can be connected, one end of the base plate (1) and the fitting element (4, 12) being provided with interlockable projections (24) and/or angled portions (27) and the opposite end portions being provided with means locking both of them,
**characterized in**
**that** the base plate (1) and the fitting element (4) or the part (12) connected therewith can be moved into their engaged coupled position by parallel displacement, and that the opposite end portion of the base plate (1) is provided with a rotatable, but axially stationary, eccentric disk-shaped head (19), which can be rotated from its position covering the base plate (1) into a position protruding beyond the same, in which it extends through the fitting element (12) in an aperture (29), extends over a shoulder (30) of the edge of the aperture (29) and moves the fitting element (4, 12) such that the parts (24, 27) to be interlocked are moved into their coupled position.

2. The device as claimed in claim 1, **characterized in that** the coupling part of the fitting element is a plate (12).

3. The device as claimed in any of claims 1 or 2, **characterized in that** the front end of the base plate (1) is provided with an acute-angled edge (24) and the plate (12) is provided with a complementary angled portion (27) engaging behind the same.

4. The device as claimed in any of claims 1 to 3, **characterized in that** the shoulder (30) of the edge of the aperture (29) of the plate (12), which is overlapped by the head (19), is provided with a wedge-shaped bevel.

5. The device for mounting a fitting element, preferably the support arm (4) of a hinge, to a furniture wall (3) or the like, comprising a base plate (43) which can be attached to the wall (3) e.g. by means of dowels or screws (2) and with which the fitting element or a part (40) connected therewith can be connected, one end of the base plate (43) and the fitting element (4, 40) being provided with interlockable projections (50) and/or angled portions (55) and the opposite end portions thereof being provided with means locking both of them,
**characterized in**
**that** the opposite ends of the base plate (43) and the fitting element (4, 40) are provided with parts (50, 55; 52, 56) interlockable with each other by parallel displacement and engagement, and that the base plate (43) is provided with a rotatable, but axially stationary eccentric plate-shaped head (47), which extends through an aperture (59) of the fitting element (40), engages an edge of the aperture (59) and thereby moves the parts to be interlocked into their coupled position.

6. The device as claimed in any of claims 1 to 5, **characterized in that** the fitting element (4) interlocked with the base plate (1, 43) or the intermediate plate (12, 52) interlocked with the base plate (1, 43) can loosely be attached to each other at their end portions opposite the interlocking by a resilient snap connection for the purpose of preassembly.

7. The device as claimed in claim 6, **characterized in that** in their respective end portions the fitting element (4) and the intermediate plate (12) are provided with a resilient element which snaps behind a rear beveled locking edge (29) of the base plate (1) when the same is depressed into the plane of the base plate (1).

8. The device as claimed in claim 7, **characterized in that** the resilient element consists of a spring wire (28) retained in lateral edges (26) of the intermediate plate (12).

9. The device as claimed in claim 7, **characterized in that** the resilient element consists of a spring washer (32) mounted on the shank (18) of the eccentric plate-shaped head (19) between the eccentric head and the base plate (1).

## Revendications

1. Dispositif de fixation d'une pièce de ferrure, de préférence du bras portant (4) d'une charnière, à une paroi de meuble (3) ou autre, consistant en une plaque de base (1) pouvant être fixée à la paroi (3), par exemple par l'intermédiaire de chevilles ou de vis (2), à laquelle la pièce de ferrure ou une pièce (12) raccordée à celle-ci peut être raccordée, la plaque de base (1) et la pièce de ferrure (4, 12) étant munie à une extrémité de saillies (24) pouvant être accrochées l'une à l'autre et/ou de pièces angulaires (27) et à leurs extrémités opposées d'un organe qui les verrouille toutes les deux,
**caractérisé en ce que**
la plaque de base (1) et la pièce de ferrure (4), respectivement la pièce (12) raccordée à celle-ci peuvent être déplacées par un déplacement parallèle dans leur position d'accouplement dans laquelle ils s'accrochent l'une derrière l'autre, et **en ce que** la plaque de base (1) est munie, à son extrémité opposée, d'une tête (19) tournante, mais immobile dans son axe, excentrique et en forme de disque, qui peut être tournée à partir de sa position recouvrant la plaque de base (1) dans une position surmontant celle-ci, dans laquelle elle pénètre la pièce de ferrure (12) à travers un passage (29), recouvre un épaulement (30) du bord du passage (29) et déplace la pièce de ferrure (4, 12) de sorte à mettre les pièces destinées à s'accrocher l'une à l'autre (24, 27) dans leur position accouplée.

2. Dispositif suivant la revendication 1, **caractérisé en ce que** la partie de la pièce de ferrure qui assure l'accouplement est une plaque (12).

3. Dispositif suivant l'une quelconque des revendications 1 ou 2, **caractérisé en ce que** la plaque de base (1) est munie à son extrémité avant d'une arête acutangle (24) et que la plaque (12) est munie d'une pièce angulaire complémentaire (27) qui s'accroche derrière cette arête.

4. Dispositif suivant l'une quelconque des revendications 1 à 3, **caractérisé en ce que** l'épaulement (30) du bord du passage (29) de la plaque (12) recouvert par la tête (19) est munie d'un chanfrein en forme de clavette.

5. Dispositif de fixation d'une pièce de ferrure, de préférence du bras portant (4) d'une charnière, à une paroi de meuble (3) ou autre, consistant en une plaque de base (43) pouvant être fixée à la paroi (3), par exemple par l'intermédiaire de chevilles ou de vis (2), à laquelle la pièce de ferrure ou une pièce (40) raccordée à celle-ci peut être raccordée, la plaque de base (43) et la pièce de ferrure (40) étant munie à une extrémité de saillies (50) pouvant être accrochées l'une à l'autre et/ou de pièces angulaires (55) et à leurs extrémités opposées d'un organe qui les verrouille toutes les deux,
**caractérisé en ce que**
la plaque de base (43) et la pièce de ferrure (4, 40) sont munies à leurs extrémités opposées de pièces (50, 55 ; 52, 56) pouvant être accrochées l'une à l'autre par un déplacement parallèle et par un accrochage de l'une derrière l'autre et **en ce que** la plaque de base (43) est munie d'une tête toumante, mais immobile dans son axe, excentrique et en forme de plaquette (47) qui pénètre un passage (59) de la pièce de ferrure (40), saisit une arête du passage (59) et de cette manière déplace les pièces destinées à s'accrocher l'une à l'autre afin d'obtenir leur position accouplée.

6. Dispositif suivant l'une quelconque des revendications 1 à 5, **caractérisé en ce que** la pièce de ferrure accrochée à la plaque de base (43) ou la plaque intermédiaire (12, 40) raccordée à la pièce de ferrure et accrochée à la plaque de base (43) peuvent être attachées lâchement l'une à l'autre à leurs extrémités qui sont opposées à l'accrochage par l'intermédiaire d'un assemblage à encliquetage élastique à ressort en vue d'un montage préalable.

7. Dispositif suivant la revendication 6, **caractérisé en ce que** la pièce de ferrure (4) ou la plaque intermédiaire (12) sont munies à leurs extrémités d'un élément élastique à ressort qui s'encliquète derrière une arête d'encliquetage arrière à chanfrein (29) de la plaque de base (1), lorsque lesdites extrémités sont enfoncés sur le niveau de la plaque de base (1).

8. Dispositif suivant la revendication 7, **caractérisé en ce que** l'élément élastique à ressort consiste en un fil d'acier pour ressort (28) maintenu dans des bords latéraux (26) de la plaque intermédiaire (12).

9. Dispositif suivant la revendication 7, **caractérisé en ce que** l'élément élastique à ressort consiste en une rondelle élastique (32) attachée à la tige (18) de la tête excentrique en forme de plaquette (19) et située entre la tête excentrique et la plaque de base (1).
